# FASCICULE DE BREVET EUROPEEN

(11) **EP 1 720 730 B1**
(45) Date de publication et mention de la délivrance du brevet: **22.04.2009**
(21) Numéro de dépôt: 05717710.7
(22) Date de dépôt: 14.02.2005
(51) Int. Cl.: B60N 3/04

(54) **TAPIS POUR HABITACLE DE VEHICULE AUTOMOBILE POURVU DE DECOUPES POUR PASSAGE DE CABLES**
MIT AUSSCHNITTEN FÜR KABEL VERSEHENER TEPPICH FÜR DEN FAHRGASTRAUM EINES KRAFTFAHRZEUGS
CARPET FOR THE PASSENGER COMPARTMENT OF A MOTOR VEHICLE PROVIDED WITH CUT-OUTS FOR CABLES

(30) Priorité: 26.02.2004 FR 0401939
(43) Date de publication de la demande: 15.11.2006
(73) Titulaire: Renault SAS, 92100 Boulogne Billancourt (FR)
(72) Inventeur: BOUILLON, Jean Charles, F-78340 LES CLAYES SOUS BOIS (FR)
(86) Numéro de dépôt international: PCT/FR2005/050092
(87) Numéro de publication internationale: WO 2005/085000

(56) Documents cités:
- DE-A- 19 901 989
- FR-A- 2 039 975
- GB-A- 2 203 598
- US-A- 2 909 234
- PATENT ABSTRACTS OF JAPAN vol. 1995, no. 08, 29 septembre 1995 (1995-09-29) -& JP 07 117547 A (SUZUKI MOTOR CORP), 9 mai 1995 (1995-05-09)
- PATENT ABSTRACTS OF JAPAN vol. 2000, no. 21, 3 août 2001 (2001-08-03) -& JP 2001 105861 A (TOYOTA AUTO BODY CO LTD), 17 avril 2001 (2001-04-17)
- PATENT ABSTRACTS OF JAPAN vol. 2000, no. 07, 29 septembre 2000 (2000-09-29) -& JP 2000 095010 A (HONDA ACCESS CORP), 4 avril 2000 (2000-04-04)

## Description

L'invention concerne un tapis pour habitacle de véhicule automobile pourvu de découpes pour des passages de câbles.

Les tapis d'habitacle ont, dans les véhicules automobiles, une première fonction esthétique, consistant à conférer au sol l'aspect souhaité, et une deuxième fonction essentielle d'isolant acoustique.

En effet, le plancher du véhicule, recouvert du tapis, est une des zones générant le plus de bruit dans l'habitacle. Les tapis sont donc réalisés de manière à former un écran acoustique efficace. Ils sont généralement constitués d'une moquette au dos de laquelle est appliquée une enduction haute densité (appelée masse lourde), ce qui leur confère une certaine raideur, en un film dit étanche.

Les sièges avant et arrière des véhicules actuels comportent de plus en plus d'équipements électroniques, tels que des commandes, des dispositifs de chauffage, des airbags ou des boîtiers multimédias, dont l'alimentation est réalisée par des câblages cachés sous le tapis. Il est alors nécessaire de prévoir des découpes dans le tapis, notamment au niveau des sièges, pour permettre le passage des câbles. On connaît des tapis dans lesquels sont réalisés des découpes permettant le passage de pattes à fixer sur le sol du véhicule, tel que décrit dans le document JP 07 117547. Toutefois, de telles découpes ne sont pas adaptées au maintien d'un câble en position dans un orifice de la découpe.

Ces découpes doivent permettre à la fois un montage facile des câbles malgré la raideur du tapis, tout en limitant les fuites acoustiques après montage. On connaît notamment des découpes formées d'un orifice dimensionné pour le passage d'un câble afin de limiter les fuites acoustiques, tel que décrit dans le document FR 2 039 975. Mais le montage d'un câble au travers d'un tel orifice est difficile en raison de l'ajustement de la taille de l'orifice à la taille du câble.

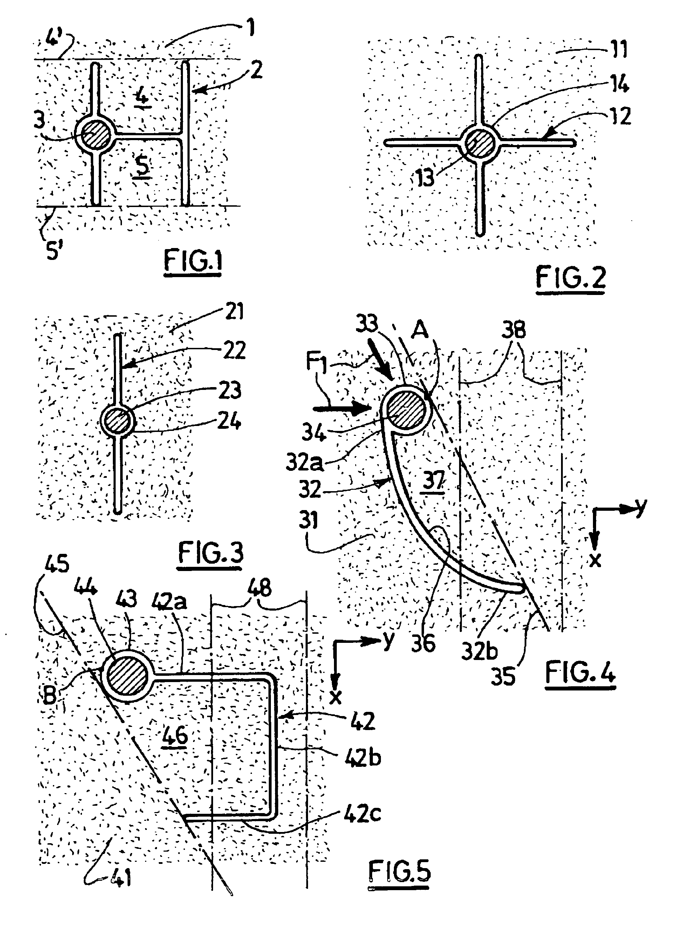

Des exemples de découpes de tapis sont représentés sur les figures 1 à 3.

La figure 1 représente un tapis 1 pourvu d'une découpe 2 en forme de H, traversée par un câble 3 (représenté en coupe). Deux languettes 4 et 5 sont ainsi formées de part et d'autre de la barre horizontale du H, pivotant autour des lignes 4' et 5' joignant les extrémités du H (en pointillés). Cette découpe en H peut être utilisée pour différentes tailles de câbles. Le câble est installé facilement en soulevant les languettes 4 et 5, ce qui procure une large ouverture. Il vient se loger entre les languettes 4 et 5 et une des barres verticales du H en écartant les bords de la découpe tel que représenté sur la figure 1 (aucun orifice circulaire n'est prévu pour recevoir le câble). Toutefois, ces languettes restent légèrement écartées autour du câble 3 créant ainsi des fuites acoustiques. De plus, avec le temps, les languettes 4, 5 tombent par gravité formant un orifice dans lequel des pièces, graviers, ou autres débris peuvent s'accumuler. Il est également préférable qu'une telle découpe ne soit pas dans une zone accessible aux pieds du passager pour éviter tout risque d'écrasement ou de détérioration des languettes. Enfin, cette solution présente l'inconvénient d'être peu adaptée à la technique de découpe par jet d'eau haute pression, couramment utilisée pour les tapis. La réalisation d'une telle découpe nécessite en effet trois interruptions du jet au cours de la découpe, ce qui augmente le temps de cycle.

La figure 2 représente un tapis 11 pourvu d'une découpe en étoile 12, traversée par un câble 13 (représenté en coupe). Le centre de l'étoile est pourvu d'un orifice circulaire 14 destiné au passage du câble. Pour être plus efficace que la découpe en H, cette découpe doit être dimensionnée au plus juste, ce qui oblige généralement un passage long et fastidieux des câbles un à un. Lorsque l'étoile est de petite dimension et que les câbles et connecteurs se positionnent naturellement au centre de l'étoile après montage, une telle découpe représente un bon compromis entre facilité de montage et isolation acoustique. Toutefois, si le ou les câbles glissent vers les pointes de l'étoile, les bords de la découpe vont s'écarter créant des fuites acoustiques. Par ailleurs, de même que pour la découpe en H, cette solution est peu adaptée à la technique de découpe par jet d'eau en raison des trois interruptions nécessaires.

La figure 3 représente un tapis 21 pourvu d'une découpe rectiligne 22, traversée par un câble 23 (représenté en coupe). Le centre de la découpe est pourvu d'un orifice circulaire 24 destiné au passage du câble. Cette solution peut représenter un bon compromis, notamment en raison du fait que le câble peut subir de faibles contraintes transversales à la direction de la découpe sans créer de fuites acoustiques permanentes. Une telle découpe peut également être réalisée facilement par un procédé de découpe par jet d'eau, étant donné qu'elle ne nécessite pas d'interruption du jet d'eau. Toutefois, lorsque le tapis présente une raideur importante, le monteur doit passer les câbles un à un en raison de la difficulté à écarter les bords de la fente. Une telle découpe est donc plus particulièrement adaptée à un tapis relativement souple.

L'invention vise à pallier ces inconvénients en proposant un tapis d'habitacle pourvu d'une découpe qui permette un montage facile d'un ou plusieurs câbles en une seule opération quelque soit la raideur du tapis. La découpe selon l'invention présente également l'avantage de réduire les fuites acoustiques. Par ailleurs, elle peut être réalisée facilement par la technique de découpe par jet d'eau, sans nécessiter d'interruptions du jet d'eau. Une telle découpe est également compatible avec une découpe par lame.

A cet effet, l'objet de l'invention concerne un tapis pour habitacle de véhicule automobile, comportant au moins une découpe pour le passage d'un ou plusieurs câbles au travers du tapis, **caractérisé en ce qu**'au moins une découpe est formée d'une fente courbe de forme concave dont au moins une extrémité est pourvue d'un orifice circulaire destiné à recevoir le ou les câbles. Le positionnement d'un orifice de passage de câble en extrémité permet une mise en place facile, le monteur devant simplement tirer le câble vers l'extrémité de la fente pour qu'il se positionne correctement. Par ailleurs, la forme concave de la fente permet le positionnement du câble suivant un mouvement simple tout en procurant une ouverture de surface suffisamment grande pour une introduction facile du ou des câbles.

Au voisinage de l'orifice, la fente est sensiblement tangente au bord de l'orifice. Ce décalage améliore le positionnement du câble dans l'orifice. En effet, le centre du câble n'est pas directement dans le prolongement de la fente, de sorte que le câble n'aura pas tendance à retourner dans la fente sous l'effet de contraintes externes.

L'orifice est situé du côté de la concavité de la fente.

Dans une première variante, au voisinage de l'orifice, la fente est sensiblement perpendiculaire au bord de l'orifice. Cette variante est utilisée de préférence lorsque le câble subit des contraintes perpendiculaires à la direction de la fente voisine de l'orifice, afin d'éviter le glissement du câble dans la fente.

Dans un premier mode de réalisation, la fente est courbe. Une telle forme permet une découpe aisée, notamment par la technique de découpe par jet d'eau, mais également par d'autres techniques.

Plus particulièrement, la tangente de l'une des extrémités de la fente est sensiblement parallèle à, ou proche de, la direction longitudinale du tapis, et la tangente de l'autre extrémité est sensiblement parallèle à, ou proche de, la direction transversale du tapis. Il est alors possible, après le montage du câble, de bloquer une extrémité de la fente, de préférence dépourvue de câble, sous un autre élément du véhicule qui s'étend dans une direction longitudinale ou transversale du tapis, par exemple une glissière de siège. Un tel maintien limite l'ouverture de la fente au cours de la durée de vie du véhicule, et par conséquent limite, ou retarde, l'apparition ultérieure de fuites acoustiques.

Dans la présente demande, on considère que les directions longitudinale et transversale du tapis sont confondues avec les directions longitudinale et transversale du véhicule automobile.

Dans un deuxième mode de réalisation, la fente est formée d'au moins deux segments de droite. Une telle forme est adaptée aussi bien à la technique de découpe par jet d'eau qu'à une autre technique de découpe, par exemple par lame.

Plus particulièrement, la fente peut être formée de trois segments, les deux segments d'extrémités étant sensiblement parallèles à la direction transversale du tapis, le segment central étant sensiblement parallèle à la direction longitudinale du tapis. Cette orientation favorise le maintien d'une partie de la découpe sous un élément du véhicule limitant l'apparition de fuites acoustiques.

Avantageusement, l'orifice est circulaire, de diamètre sensiblement égal au diamètre du ou des câbles destinés à le traverser. Une telle configuration permet de minimiser les fuites acoustiques provenant du passage des câbles au travers du tapis.

L'invention est maintenant décrite en référence aux dessins annexés, non limitatifs, dans lesquels :
- les figures 1 à 3 sont des vues de dessus de tapis d'habitacle pourvus respectivement d'une découpe en H, d'une découpe en étoile et d'une découpe rectiligne selon l'art antérieur ;
- les figures 4 et 5 représentent des vues de dessus de deux modes de réalisation de tapis d'habitacle pourvus d'une découpe selon l'invention.

Les figures 1 à 3 ayant déjà été décrites, seules les figures 4 et 5 seront détaillées. Sur toutes les figures, les distances entre les bords des découpes, et entre les découpes et les câbles ont été exagérées pour plus de clarté. Ces bords sont normalement quasiment en contact les uns contre les autres, de même que la surface externe d'un câble est en contact avec le bord de la découpe afin de limiter les fuites acoustiques et la pénétration de débris divers.

Sur les figures, les directions X et Y définissent respectivement les directions longitudinale et transversale du tapis.

Un premier mode de réalisation de l'invention est décrit en référence à la figure 4. Cette figure représente un tapis 31 présentant une découpe formée d'une fente 32 courbe et concave dont une extrémité 32a est pourvue d'un orifice circulaire 33, destiné au passage d'un câble 34 au travers du tapis. Cette extrémité 32a est sensiblement tangente à l'orifice 33, lequel est situé du côté de la concavité de la fente.

La découpe présente ainsi une forme générale semblable à une virgule. Cette forme génère une ligne virtuelle de pliage 35 du tapis à proximité de la découpe. La ligne 35 correspond sensiblement à la tangente à l'orifice circulaire 33 passant par l'extrémité de la fente 32b opposée à l'orifice 33. La ligne 35 et le bord 36 de la fente dirigé du côté de la concavité de la fente 32, définissent une languette 37 qui va pouvoir être aisément soulevée par le monteur pour introduire le câble 34. Une simple traction du câble en direction de l'orifice 33 va permettre un positionnement correct dans l'orifice.

Grâce à la position tangente de l'orifice 33 par rapport à la fente 32, le bord de l'orifice sert de butée au câble lorsque ce dernier subit des contraintes dirigées suivant les flèches F1 de la figure 4. Il est par ailleurs possible d'ajuster la taille de l'orifice 33 au plus près des dimensions du ou des câbles qu'il est destiné à recevoir afin de limiter les fuites acoustiques, sans toutefois nuire à la facilité du montage en raison de la large ouverture procurée par le pivotement de la languette 37.

Dans l'exemple, la tangente à l'extrémité 32a de la fente est proche de la direction longitudinale X du tapis, tandis que la tangente à l'extrémité opposée 32b de la fente est sensiblement parallèle à la direction transversale Y du tapis. Cette orientation permet de placer une glissière d'un siège 38 parallèlement à l'axe X (dont les bords sont schématisés par des traits discontinus sur la figure 4) au dessus de l'extrémité 32b de la découpe distante du câble, sans toutefois recouvrir l'orifice. Un tel recouvrement garantit une bonne tenue dans le temps de la découpe en l'empêchant de s'ouvrir, sans risque de détérioration du câble.

Une telle découpe peut être réalisée en une seule étape par la technique de découpe par jet d'eau. Par exemple, le jet d'eau commence par décrire le pourtour de l'orifice circulaire 33 en partant du point A, sensiblement diamétralement opposé à l'extrémité 32a de la fente. Puis, après son retour au point A, le jet d'eau traverse l'orifice 33 suivant son diamètre afin de faire tomber le disque découpé, puis forme la fente courbe 32.

La figure 5 représente un deuxième mode de réalisation, dans lequel un tapis 41 présente une découpe formée d'une fente 42 concave formée de trois segments 42a, 42b, 42c disposés sensiblement en forme de C retourné, et dont une extrémité est pourvue d'un orifice circulaire 43, destiné au passase d'un câble 44 au travers du tapis.

L'orifice circulaire 43 est situé à l'extrémité libre d'un des segments 42a qui s'étend dans une direction passant par le centre de l'orifice 43.

Les deux segments 42a et 42c formant les extrémités de la fente 42 sont parallèles entre eux et sensiblement perpendiculaires au segment central 42b. Une ligne 45 correspondant sensiblement à la tangente à l'orifice 43 passant par l'extrémité libre du segment 42c, forme une ligne de pliage pour une languette 46 délimitée par les trois segments 42a, b, c. Le pivotement de cette languette procure une large ouverture permettant le passage aisé du câble 44, qui va venir se loger dans l'orifice 43 s'il est tiré vers l'extrémité du segment 42a.

De préférence, le troisième segment 42c est moins long que le premier segment 42a afin de limiter la longueur de la fente, et la surface de la languette 46, et de limiter ainsi l'apparition ultérieure de fuites acoustiques dues à la fatigue du tapis.

Dans cette découpe, le câble 44 subissant des contraintes perpendiculaires au segment 42a ne risquera pas de se déplacer vers la fente.

Dans l'exemple, les segments 42a, c sont sensiblement parallèles à la direction transversale Y du tapis, tandis que le segment central 42b est sensiblement parallèle à la direction longitudinale X. De même que pour l'exemple précédent, cette orientation permet de placer une glissière d'un siège 48 (dont les bords sont schématisés par des traits discontinus sur la figure 5) au dessus d'une partie de la languette 46, à distance du câble. Le segment 42b, et une partie des segments 42a et 42c sont ainsi recouverts, ce qui garantit une bonne tenue dans le temps de la découpe en l'empêchant de s'ouvrir. De cette manière, sous l'effet de contraintes parallèles au segment 42a, le câble 44 ne s'engagera pas dans la fente, cette dernière étant maintenue fermée par la glissière. On peut noter que la réalisation d'un orifice circulaire tangent au segment 42a permettrait d'améliorer le maintien dans l'orifice du câble soumis à de telles contraintes.

De préférence, la découpe est placée de manière à ne pas être située au dessus d'un vide du plancher du véhicule, afin d'éviter un affaissement de la languette 46 avec le temps et la formation de fuites acoustiques. Toutefois, ce problème peut être limité en réduisant les dimensions de la languette.

Cette découpe peut également être facilement réalisée en une seule étape par la technique de découpe par jet d'eau. Par exemple, le jet d'eau décrit d'abord l'orifice circulaire 43 en partant d'un point B sensiblement diamétralement opposé au segment 42a, puis traverse l'orifice sur son diamètre pour faire tomber le disque de matière découpé, et poursuit la découpe des segments 42a, 42b, 42c.

Dans les deux modes de réalisation, la longueur et la forme des fentes peuvent être choisies de manière à réduire au minimum la surface des languettes, afin de limiter la formation de fuites acoustiques dues à la fatigue du tapis.

La position de l'orifice par rapport à la fente d'un des modes de réalisation décrits peut être utilisée pour l'autre mode de réalisation.

L'orientation de chaque fente est à étudier en fonction des éléments à placer sur le plancher du véhicule.

En raison de leur forme, les découpes selon l'invention permettent un recouvrement important d'une partie de la fente par un élément du véhicule ce qui améliore la tenue de la fente dans le temps et permet un placement de ces découpes dans une zone accessible aux pieds du passager. Il n'est pas possible de recouvrir de cette manière les découpes de l'art antérieur, les câbles étant disposés de manière centrale seule une partie de ces découpes pourrait être maintenue, la partie opposée restant sujette aux contraintes externes.

En variante, il est possible de prévoir un orifice à chaque extrémité de la fente. Seule la partie centrale de la fente peut alors être recouverte par un élément du véhicule.

## Revendications

1. Tapis pour habitacle de véhicule automobile, comportant au moins une découpe pour le passage d'un ou plusieurs câbles **au travers du tapis, caractérisé en ce qu'**au moins une découpe est formée d'une fente (32) courbe de forme concave (32) dont au moins une extrémité **(32a)** est pourvue d'un orifice (33) circulaire destiné à recevoir le ou les câbles (34), **ladite extrémité (32a) étant sensiblement tangente à l'orifice, lequel est situé du côté de la concavité de la fente.**

2. Tapis selon la revendication 1, **caractérisé en ce que** la tangente de l'une des extrémités de la fente (32a) est sensiblement parallèle à, ou proche de, la direction longitudinale du tapis, et la tangente de l'autre extrémité (32b) est sensiblement parallèle à, ou proche de, la direction transversale du tapis.

3. Tapis selon la revendication 1 ou 2, **caractérisé en ce que** l'orifice est circulaire, de diamètre sensiblement égal au diamètre du ou des câbles (33) destinés à le traverser.

## Claims

1. Carpet for motor vehicle passenger compartment, comprising at least one cutout for the passage of one or more cables through the carpet, **characterized in that** at least one cutout is formed of a curved slit (32) of concave form (32) at least one end (32a) of which is provided with a circular orifice (33) intended to receive the cable or cables (34), the said end (32a) being substantially tangential to the orifice, which is situated on the concavity side of the slit.

2. Carpet according to Claim 1, **characterized in that** the tangent of one of the ends of the slit (32a) is substantially parallel to, or close to, the longitudinal direction of the carpet, and the tangent of the other end (32b) is substantially parallel to, or close to, the transverse direction of the carpet.

3. Carpet according to Claim 1 or 2, **characterized in that** the orifice is circular, of diameter substantially equal to the diameter of the cable or cables (33) intended to pass through it.

## Patentansprüche

1. Teppich für den Fahrgastraum eines Fahrzeugs, umfassend mindestens einen Ausschnitt für die Durchführung eines oder mehrerer Kabel durch den Teppich, **dadurch gekennzeichnet, dass** mindestens ein Ausschnitt von einem gekrümmten Schlitz (32) mit konkaver Form (32) gebildet ist, wobei mindestens ein Ende (32a) desselben mit einer kreisförmigen Öffnung (33) versehen ist, die dazu bestimmt ist, das oder die Kabel (34) aufzunehmen, wobei das Ende (32a) im Wesentlichen die Öffnung tangiert, die sich auf der Seite der Konkavität des Schlitzes befindet.

2. Teppich nach Anspruch 1, **dadurch gekennzeichnet, dass** die Tangente eines der Enden des Schlitzes (32a) im Wesentlichen parallel zu oder nahe der Längsrichtung des Teppichs ist, und dass die Tangente des anderen Endes (32b) im Wesentlichen parallel zu oder nahe der Querrichtung des Teppichs ist.

3. Teppich nach Anspruch 1 oder 2, **dadurch gekennzeichnet, dass** die Öffnung kreisförmig mit einem Durchmesser im Wesentlichen gleich dem Durchmesser des oder der Kabel (33) ist, die dazu bestimmt sind, durch sie hindurchgeführt zu werden.
